# NEUE EUROPÄISCHE PATENTSCHRIFT

(11) **EP 3 549 421 B2**
(45) Veröffentlichungstag und Bekanntmachung des Hinweises auf die Entscheidung über den Einspruch: **15.11.2023**
(45) Hinweis auf die Patenterteilung: 27.01.2021
(21) Anmeldenummer: 19162582.1
(22) Anmeldetag: 13.03.2019
(51) Int. Cl.: A01C 9/02, A01C 19/02, A01C 21/00

(54) **LEGEMASCHINE**
LAYING MACHINE
PLANTEUSE

(30) Priorität: 16.03.2018 DE 102018106152; 29.03.2018 DE 102018107643
(43) Veröffentlichungstag der Anmeldung: 09.10.2019
(73) Patentinhaber: Grimme Landmaschinenfabrik GmbH & Co. KG, 49401 Damme (DE)
(72) Erfinder: VOGT, Anna-Lena, 49448 Hüde (DE); LANGE GEN. DETERT, Ansgar, 49324 Melle (DE)
(74) Vertreter: Wischmeyer, André

(56) Entgegenhaltungen:
- DE-A1-102009 055 309
- DE-U1- 9 318 225
- US-A1- 2006 086 295
- US-B2- 8 196 534

## Beschreibung

Die Erfindung betrifft eine Legemaschine zum Legen von Knollen, insbesondere Kartoffeln. Die Legemaschine umfasst zumindest einen Bunker zur Bevorratung der Knollen, zumindest zwei Legevorrichtungen, die jeweils zumindest ein im Betrieb der Legevorrichtung umlaufendes Förderelement aufweisen, und zumindest eine Antriebsvorrichtung. Zumindest eine der Legevorrichtungen, insbesondere jede Legevorrichtung, weist eine Koppelvorrichtung auf. Die Koppelvorrichtung ist von einer Koppelstellung, in der im Betrieb zumindest ein Förderelement der Legevorrichtung von der Antriebsvorrichtung angetrieben wird, in eine Trennstellung überführbar, in der im Betrieb das Förderelement nicht von der Antriebsvorrichtung angetrieben ist.

Derartige Legemaschinen sind im Betrieb in der Regel an eine Zugmaschine gekoppelt, von der sie über einen Ackerschlag, auf dem die Knollen zu legen, d. h. zu pflanzen, sind, fortbewegt werden. Im Betrieb wird durch jede Legevorrichtung eine sich in Fortbewegungsrichtung der Zugmaschine erstreckende Reihe von Knollen, insbesondere Kartoffeln, gelegt, wozu während der Fortbewegung laufend einzelne Knollen abgelegt werden. Insbesondere wird jede Reihe in Form eines Damms aufgebaut. Durch das zumindest eine Förderelement werden die Knollen aus dem Bunker dabei vereinzelt dem Erdboden zugeführt und im Damm abgelegt.

Beide Legevorrichtungen sind durch die eine Antriebsvorrichtung antreibbar. Dabei ist das zumindest eine Förderelement durch die Koppelvorrichtung mit der Antriebsvorrichtung koppel- und davon trennbar. Während des Betriebs der Antriebsvorrichtung und bei Befinden der Koppelvorrichtung in Koppelstellung ist somit auch die zumindest eine Legevorrichtung betrieben. Dabei läuft ihr Förderelement um und fördert dabei einzelne Kartoffeln dem Erdboden zu.

Die Koppelvorrichtung bei einer aus der Praxis bekannten Legemaschine umfasst zur Schaltung einen Aktuator, welcher durch eine anzutreibende Längsbewegung einen an der Legevorrichtung angeordneten Hebel schwenkt. Dieser wiederum verschwenkt einen in Koppelstellung im Betrieb umlaufenden Hebel, der dabei mit der Antriebsvorrichtung gekoppelt ist.

DE 10 2009 055309 A1 offenbart eine Legemaschine gemäß dem Oberbegriff des Anspruchs 1.

Nachteil des Standes der Technik ist, dass durch die zeitaufwändige Überführung der Koppelvorrichtung die Zu- und Abschaltung der Legevorrichtung nur mit langen Reaktionszeiten möglich ist und somit im Betrieb der Legemaschine eine gewünschte Erstreckung einzelner Kartoffelreihen nur ungenau steuerbar ist. Kartoffeln sollen gezielter als im Stand der Technik bekannt im Damm abgelegt werden.

Aufgabe der vorliegenden Erfindung ist es daher, eine Legemaschine mit einem wunschgemäß verbesserten Funktionsumfang insbesondere bei einem möglichst geringen Bauraum der Koppelvorrichtung bereitzustellen.

Die Aufgabe wird gelöst durch eine Legemaschine gemäß Anspruch 1.

Die Elektromagnetkupplung wird dabei auch als Magnetkupplung oder als elektromagnetische Kupplung bezeichnet. Diese Kupplung hat zwei insbesondere relativ zueinander bewegliche Kupplungspartner, wobei die Kupplung und insbesondere zumindest einer der beiden Kupplungspartner zur Erzeugung eines Magnetfeldes ausgebildet ist. Vorzugsweise ist dazu eine Spule vorhanden, die bei Anlegen eines Stromes ein Magnetfeld erzeugt, welches zur Verbindung oder Trennung der Kupplungspartner führt. Insbesondere erstreckt sich das Magnetfeld von dem einen bis zum jeweils anderen Kupplungspartner und führt je nach Aufbau der Kupplung zur Trennung oder zur Zusammenführung der Kupplungspartner.

Elektromagnetkupplungen zeichnen sich durch besonders geringe Schaltzeiten aus. Durch Verwendung der Elektromagnetkupplung für die Legemaschine wird somit erreicht, dass die zumindest eine Legevorrichtung in besonders kurzer Zeit und bei durchgängig betriebener Antriebsvorrichtung zu- und abgeschaltet werden kann. Dadurch lassen sich ein selektiver Betrieb der Legevorrichtungen mit kurzen Reaktionszeiten realisieren und die zu legenden Knollen besonders exakt positionieren. Insbesondere Bereiche, in denen eine zu große oder zu kleine Zahl an Knollen abgelegt wurde, lassen sich so vermeiden. Gegenüber den Koppelvorrichtungen des Standes der Technik hat die Elektromagnetkupplung darüber hinaus einen besonders kurzen Verfahrweg, um welchen bei der Überführung der Koppelvorrichtung von der Koppelstellung in die Trennstellung zumindest ein Kupplungspartner bevorzugt bewegt wird. Daraus ergibt sich ein besonders geringer Raumbedarf der Koppelvorrichtung.

Insbesondere ist durch die Verwendung der Elektromagnetkupplung eine Schaltzeit von höchstens einer Sekunde zu erreichen. Die Schaltzeit ist dabei die Zeit, die zwischen einem Signaleingang zur Überführung der Koppelvorrichtung und dem Erreichen der mit dem Signal beabsichtigten Stellung der Koppelvorrichtung (Koppelstellung oder Trennstellung) verstreicht.

Bevorzugt ist zumindest in Trennstellung der Koppelvorrichtung zwischen den beiden Kupplungspartnern ein Luftspalt angeordnet, wobei bevorzugt einer der Kupplungspartner sich mit der Antriebsvorrichtung bewegt und der andere nicht. Bei Überführung der Koppelvorrichtung in die Koppelstellung wird dabei der Luftspalt insbesondere durch eine Verschiebung eines Kupplungspartners geschlossen. Alternativ handelt es sich bei der Elektromagnetkupplung bevorzugt um eine Magnetpulverkupplung oder um eine berührungslose Magnetkupplung, bei welchen der Abstand der Kupplungspartner nicht änderbar ist.

Bevorzugt weist die Koppelvorrichtung eine Drehmomentstütze auf, die einen Umlauf des Förderelementes in Trennstellung vermeidet. Die Drehmomentstütze ist bevorzugt an einem Gehäuse der zumindest einen Legevorrichtung angeordnet und stützt vorzugsweise ein Triebrad, durch welches eine Bewegung auf das Förderelement übertragen wird, in Trennstellung durch mechanische Kopplung dessen gegen eine Rotation ab.

Das Förderelement ist vorzugsweise entweder als Becherband oder als Riemen eines Riemenbettes ausgebildet. Das Becherband ist ein im Betrieb umlaufendes Band, an welchem eine Mehrzahl von in Umlaufrichtung voneinander beabstandeten Becherelemente angeordnet sind, die dazu ausgebildet sind, bei aufwärtsgerichtetem Durchlauf derer durch den mit Knollen gefüllten Bunker jeweils eine Kartoffel aufzunehmen und anschließend, nach Umlenkung des Förderelementes, nacheinander einzeln dem Ackerboden zuzuführen.

Alternativ ist das Förderelement bevorzugt ein Riemen eines Riemenbettes, welches ebenso zur vereinzelten Zuführung von Knollen zum Erdboden genutzt wird. Dabei weist jede Legevorrichtung bevorzugt eine Vielzahl von umlaufenden Riemen auf, die sich zumindest teilweise hinsichtlich Umlaufrichtung oder -geschwindigkeit unterscheiden. Dadurch werden vereinzelte Kartoffeln, die unmittelbar auf den Riemen aufliegen, in im Wesentlichen horizontaler Richtung gefördert und jeweils durch Umlenkung des sie tragenden Riemenabschnittes vom Riemen gelöst und dem Ackerboden zugeführt. Bei beiden Ausgestaltungen des Förderelements haben diese bzw. die Förderelemente umlenkenden Umlenkrollen, -schienen bzw. Triebräder eine Drehachse, welche in einer Querrichtung, horizontal und orthogonal zur Fortbewegungsrichtung der Legemaschine, angeordnet ist. In dieser Anordnung sind die Förderelemente besonders raumsparend zu lagern und die Knollen in Querrichtung exakt zu positionieren.

In einer vorteilhaften Ausgestaltung der Erfindung ist die Koppelvorrichtung mit einer Koppelfläche zu einer Übertragung eines Drehmomentes von insbesondere bis zu 120 Nm, vorzugsweise bis zu 100 Nm, ausgebildet. Die Koppelfläche wird dabei zumindest durch einen der beiden Kupplungspartner zumindest teilweise ausgebildet und befindet sich in der Koppelstellung insbesondere in Kontakt mit dem jeweils anderen Kupplungspartner. Alternativ ist durch die Elektromagnetkupplung ein Koppelement verlagerbar, welches die Koppelfläche zur Übertragung des Drehmomentes aufweist. Die Koppelfläche ist gekennzeichnet durch eine Oberflächenstruktur, eine Form sowie eine Flächengröße, wobei jeder dieser Parameter variierbar und dadurch das zu übertragende Drehmoment anpassbar ist. Durch die Festlegung dieser Parameter derart, dass das angegebene Drehmoment übertragen werden kann, ist die Funktion der Legevorrichtungen in Koppelstellung besonders zuverlässig gewährleistet.

Vorzugsweise ist die Koppelvorrichtung zur Übertragung eines Drehmomentes von höchstens 120 Nm, insbesondere von höchstens 100 Nm, ausgebildet. Liegt an einem Kupplungspartner bzw. Förderelement oder Antriebsvorrichtung ein höheres Drehmoment an, findet keine vollständige Drehmomentübertragung durch die Kopplungsvorrichtung mehr statt. Durch diese Begrenzung wird eine Überlastsicherung realisiert, die bei einer Blockade die auf das blockierte Bauteil wirkende Kraft begrenzt. Durch diese weitere Funktion der Legemaschine wird bei einer Blockade ein daraus resultierenden Schaden an der Legemaschine zumindest begrenzt.

Bevorzugt umfasst die Antriebsvorrichtung einen Hydraulikmotor und/oder zumindest ein im Betrieb auf dem Boden abrollendes Antriebsrad. Besonders bevorzugt umfasst die Antriebsvorrichtung zusätzlich eine Antriebswellenvorrichtung. Insbesondere weist die Antriebswellenvorrichtung zumindest eine drehbar gelagerte Antriebswelle auf. Der Hydraulikmotor erzeugt im Betrieb der Antriebsvorrichtung eine Rotation der Antriebswellenvorrichtung. Durch die Verwendung des Hydraulikmotors kann eine besonders kompakte Bauart der Legemaschine realisiert werden und bei Überführung der Koppelvorrichtung von der Trennstellung in die Koppelstellung der damit einhergehende Lastwechsel besonders zuverlässig abgefangen werden. Das Antriebsrad hat bei Fortbewegung der Vorrichtung Kontakt zum Boden, durch dessen Widerstand es in eine Rotation versetzt wird. Diese Bewegung des Antriebsrades wird insbesondere mechanisch auf die Antriebswellenvorrichtung übertragen, wodurch deren Rotation ausgelöst wird. Somit ist die Rotationsgeschwindigkeit der Antriebswellenvorrichtung und damit die Anzahl der gelegten Kartoffeln pro Zeit automatisch proportional zur Fortbewegungsgeschwindigkeit der Legemaschine. Das Antriebsrad ist dabei insbesondere ein Stützrad zur Abstützung eines Teils des Gewichts der Legemaschine.

Zur Übertragung des vom Hydraulikmotor erzeugten Drehmoments auf die Legevorrichtungen wird bevorzugt eine Antriebswellenvorrichtung mit einer Mehrzahl von drehbar gelagerten Antriebswellen, wobei jeder Legevorrichtung zumindest eine Antriebswelle zugeordnet ist, genutzt. Durch die in axialer Richtung aneinander anschließenden Antriebswellen kann das Drehmoment besonders raumsparend auf die einzelnen Legevorrichtungen übertragen werden.

Die Antriebswellen sind dabei bevorzugt durch Kardangelenke zur Übertragung des Drehmomentes miteinander verbunden. Insbesondere weichen die Rotationsachsen der Antriebswellen um höchstens 20° von einer Querachse ab, welche horizontal verläuft und rechtwinklig zur Fortbewegungsrichtung der Legemaschine angeordnet ist. Dadurch kann wiederum der Bauraum weiter verkleinert werden.

Bevorzugt umfasst die zumindest eine Legevorrichtung zumindest eine drehbar auf einer Antriebswelle gelagerte Hohlwelle. In dieser Ausgestaltungsform verläuft die Antriebswellenvorrichtung durch das Förderelement und insbesondere dessen Antriebsrad zum Antrieb des jeweiligen Förderelementes hindurch. Das Antriebsrad ist dabei bevorzugt an der Hohlwelle fixiert und damit in Trennstellung relativ zur Antriebswellenvorrichtung drehbar. In Koppelstellung rotieren Hohlwelle und Antriebswelle insbesondere mit dergleichen Drehzahl. Die zumindest eine durch die Hohlwelle hindurch verlaufende Antriebswelle ist zur Spannung des Förderelementes insbesondere verschieblich gelagert, wobei ein Rückstellelement, wie eine Feder, eine Position der Antriebswelle herbeiführt, in welcher das Förderelement gespannt ist. Zur Möglichkeit einer optimalen Einstellung sämtlicher Legevorrichtungen, deren Hohlwellen darin nicht notwendigerweise dieselbe Rotationsachse haben, sind die Antriebswellen über die Kardangelenke miteinander verbunden, die die Verschieblichkeit der durch die Legevorrichtungen verlaufenden Antriebswellen, wodurch insbesondere weitere zwischen den Legevorrichtungen angeordnete Antriebswellen verlängert werden, ermöglicht. Durch die Verwendung einer Hohlwelle als Teil der Legevorrichtung baut diese besonders kompakt, wodurch auch die Kraft auf die Hohlwelle durch die Koppelvorrichtung zugunsten eines kleinen Bauraums auf kurzen Wege übertragen wird.

Zur Überführung der Koppelvorrichtung wird zumindest ein Teil der Koppelvorrichtung axial bewegt.

Der Teil der Koppelvorrichtung ist ein Kupplungspartner der Elektromagnetkupplung. Durch die Bewegungsrichtung, gemeinsam mit dem nur kurzen Verfahrweg der Elektromagnetkupplung, kann der Bauraum der Koppelvorrichtung insofern bedarfsgerecht eingestellt werden, als dass die Erstreckung der Legevorrichtung in Richtung der Querachse reduziert werden kann.

Erfindungsgemäß weist die Elektromagnetkupplung zumindest zwei Kupplungspartner auf, von denen zumindest ein Kupplungspartner entlang einer Kupplungsrotationsachse verschiebbar ist. Die Kupplungsrotationsachse ist die Achse, um welche zumindest der Kupplungspartner in der Koppelstellung im Betrieb der Legevorrichtung rotiert. Die beiden Kupplungspartner, welche in der Trennstellung kein Drehmoment zum Antrieb des Förderelements übertragen, sind durch die Verschiebbarkeit zur Schaltung der Koppelvorrichtung relativ zueinander beweglich. Insbesondere ist dadurch ein Spalt zwischen den Kupplungspartnern, welcher insbesondere in der Trennstellung besteht, so zu schließen, dass in der Koppelstellung die zumindest zwei Kupplungspartner unmittelbaren Kontakt zueinander haben und ein Drehmoment zwischen ihnen übertragen wird. Die axiale Verschiebbarkeit zur Überführung der Elektromagnetkupplung in die Koppelstellung ermöglicht einen besonders platzsparenden Aufbau der Koppelvorrichtung, welcher sich insbesondere an der Haupterstreckungsrichtung der Antriebswellenvorrichtung orientiert. Insbesondere kann außerdem ein von der Elektromagnetkupplung zu übertragendes Drehmoment auf besonders kurzem Wege und unter einer Reduzierung zwischenzuschaltender Bauteile von der Antriebswelle auf die Hohlwelle übertragen werden.

Erfindungsgemäß bevorzugt sind die Kupplungspartner zur reibschlüssigen Kraftübertragung in Koppelstellung ausgebildet. In der Koppelstellung der Koppelvorrichtung wird durch die Elektromagnetkupplung eine kraftschlüssige Verbindung zwischen den beiden Kupplungspartnern hergestellt, wobei insbesondere einer der Kupplungspartner mechanisch mit der Legevorrichtung bzw. dessen Förderelement gekoppelt ist und insbesondere ein zweiter Kupplungspartner mit der Antriebswellenvorrichtung gekoppelt ist. Durch diese Form der Kraft- bzw. Drehmomentübertragung kann insbesondere die Schaltzeit, welche zur Überführung der Koppelvorrichtung von der Trennstellung in die Koppelstellung nötig ist, insofern verringert werden, als dass die Kupplungspartner unabhängig von ihren jeweiligen, momentanen Rotationswinkeln eine Kraft bzw. ein Drehmoment übertragen können, sobald sie Kontakt haben, was insbesondere bei formschlüssigen Kupplungen nicht der Fall wäre. Die Koppelstellung wird einzig dadurch erreicht, dass die beiden Kupplungspartner mit ausreichender Kraft aneinander angedrückt werden. Insbesondere muss nach Verschieben des zumindest einen Kupplungspartners nicht bis zu einem letztendlichen formschlüssigen Eingriff der Kupplungspartner ineinander weiter rotiert werden. Weiterer Vorteil der reibschlüssigen Kraft- bzw. Drehmomentübertragung istdie Möglichkeit einer einfachen Umsetzung einer Überlastsicherung, wobei eine kritische Kraft bzw. ein kritisches Drehmoment, ab der die Kraft bzw. das Drehmoment zumindest nicht mehr gänzlich von einem Kupplungspartner auf die anderen übertragen werden soll, durch die Geometrie der Kupplungspartner bzw. die Kraft, mit der diese aneinander angedrückt werden, vorzugeben ist.

Insbesondere weist zumindest einer der Kupplungspartner eine Spule zur Erzeugung eines magnetischen Feldes, wobei die Spule alternativ ortsfest an der Legevorrichtung montiert ist und insbesondere in Koppelstellung nicht rotiert. Durch das Anlegen eines Stromes an die Spule wird durch diese ein magnetisches Feld erzeugt, durch welches eine Bewegung eines weiteren Kupplungspartners zum ersten Kupplungspartner bzw. davon weg ausgelöst wird. Bevorzugt wird die dieser Bewegung entgegengesetzte Bewegung durch ein Rückstellelement ausgelöst. Dadurch kann ein Spalt zwischen den Kupplungspartnern besonders schnell geschaffen und geschlossen werden.

Vorzugsweise hat zumindest ein Kupplungspartner eine Reibfläche oder eine gedachte Umhüllende der Reibfläche, welche um die Kupplungsrotationsachse umlaufend angeordnet und insbesondere rotationssymmetrisch ist. Die Umhüllende ist dabei eine gedachte Fläche, welche etwaige Rauheitsspitzen der Reibfläche einhüllt und sich mit einem glatten Verlauf an diese Spitzen anlegt. Dadurch, dass die Reibflächen oder die Umhüllenden der Reibflächen die Kupplungsrotationsachse vollumfänglich umgeben, kann die Kupplungsvorrichtung besonders platzsparend ausgestaltet werden. Insbesondere kann bei Verwendung einer Hohlwelle diese bei besonders geringem Platzbedarf von der Antriebswelle der jeweiligen Legevorrichtung angetrieben werden.

Erfindungsgemäß ist zumindest eine erste Reibfläche im Wesentlichen eben und eine zur ersten Reibfläche rechtwinklig angeordnete Reibflächennormale parallel zur oder in der Kupplungsrotationsachse angeordnet. Die Reibflächennormale ist dabei eine gedachte Achse. Die Reibfläche ist insofern eben, als dass Ihre Haupterstreckungsrichtung(en) in einer zur Kupplungsrotationsachse rechtwinkligen Ebene liegen, wobei Abschnitte der Reibfläche aufgrund ihrer Rauheit von der geometrischen Ebene abweichen können. Somit ist die Reibfläche im Wesentlichen scheibenförmig, wobei sie zur Ermöglichung einer durchgehenden Antriebswellenvorrichtung nicht die Kupplungsrotationsachse schneidet. Durch diese Form der Reibfläche, insbesondere bei in der Koppelstellung aufeinander aufliegenden Reibflächen, beanspruchen diese in Richtung der Kupplungsrotationsachse einen besonders geringen Raum. Um die Kupplungsrotationsachse rotieren im Betrieb und in Koppelstellung insbesondere auch die Antriebswelle und die Hohlwelle.

Eine weitere alternative bevorzugte Ausgestaltungsform der Erfindung umfasst eine als Lamellenkupplung ausgestaltete Elektromagnetkupplung, wodurch aufgrund der Mehrzahl aneinander anliegender Reibflächen die Kraft von einem Kupplungspartner auf einen weiteren Kupplungspartner besonders zuverlässig und kompakt übertragen werden kann.

Bevorzugt umfasst die Legemaschine eine Steuereinheit, welche zur voneinander unabhängigen Ansteuerung unterschiedlicher, insbesondere aller, Elektromagnetkupplungen ausgebildet ist. Die Elektromagnetkupplungen unterschiedlicher Legevorrichtungen werden somit zentral von einer Steuereinheit angesteuert, die dazu insbesondere elektrische Signale aussendet. Diese elektrischen Signale werden durch Leiterelemente übertragen, die insbesondere unmittelbar an einer Spule der Elektromagnetkupplung anliegen. Dadurch kann das Magnetfeld zur Verstellung der Elektromagnetkupplung unmittelbar und in besonders kurzer Zeit durch ein Signal der Steuereinheit erzeugt werden. Somit kann die Ausgabe zu legender Knollen durch die zumindest eine Legevorrichtung besonders exakt zu- und abgeschaltet werden.

Die Steuereinheit ist insbesondere zum Empfang elektrischer Energie ausgebildet und umfasst vorzugsweise einen Mikroprozessor zur Steuerung der auszusendenden Signale. Bevorzugt ist der Steuereinheit eine Bedieneinheit zugeordnet, durch welche ein Benutzer die Schaltung der Koppelvorrichtungen manuell einleiten oder automatisieren kann.

Besonders bevorzugt ist die Steuereinheit zur Ansteuerung der Kopplungsvorrichtung zur Ausgabe von, insbesondere analogen, elektrischen Ansteuersignalen ausgebildet. Durch die Verwendung analoger Signale ist die Legemaschine und die Steuereinheit mit ihren Funktionen besonders störungssicher betreibbar. Bevorzugt ist die Steuereinheit zur Pulsweitenmodulation der Ansteuersignale ausgebildet. Durch die Pulsweitenmodulation der insbesondere analogen Ansteuersignale sind die von der Elektromagnetkupplung zu erzeugenden Magnetfelder, insbesondere ihre Stärke, variabel einstellbar. Dadurch ist insbesondere die mit der Elektromagnetkupplung übertragbare Drehzahl und somit insbesondere ein Schlupf bzw. das übertragbare Drehmoment einstellbar. Sie bzw. es ist insbesondere insofern einstellbar, als dass zwischen der Koppelstellung und der Trennstellung der Koppelvorrichtung weitere Stellungen eingestellt werden können. Durch die Pulsweitenmodulation sind somit bevorzugt unterschiedliche Legevorrichtungen in unterschiedlichen Betriebszuständen, insbesondere mit unterschiedlichen Drehzahlen, betreibbar. Zur Wartung der Legemaschine lässt sich darüber hinaus die Pulsweitenmodulation insbesondere zur Überprüfung der Qualität der Koppelfläche nutzen, wozu beispielsweise die zu übertragende Drehzahl bzw. das zu übertragende Drehmoment in Abhängigkeit vom Ansteuersignal geprüft und ausgewertet wird.

Vorzugsweise ist die Steuereinheit zum Empfang von Informationen eines Ortungssensors und/oder zumindest eines Schlupfsensors ausgebildet. Alternativ weist die Steuereinheit einen Ortungssensor auf. Der Ortungssensor ist dabei bevorzugt als GPS- oder GSM-Sensor bzw. -empfänger ausgebildet. Durch das Signal des Ortungssensors kann die Steuereinheit automatisch die Koppelvorrichtungen in Abhängigkeit vom Aufenthaltsort der Legemaschine ansteuern. Insbesondere lässt sich in Abhängigkeit des Ortungssensorsignals automatisch durch die Steuereinheit die zumindest eine Legevorrichtung ein- oder ausschalten, wodurch eine automatische Teilbreitenschaltung der Legemaschine realisiert werden kann. Insbesondere werden dabei die Koppelvorrichtungen aller Legevorrichtungen durch die Steuereinheit derart angesteuert, dass die Knollen einheitlich und homogen auf dem gesamten zu bepflanzenden Ackerschlag gelegt werden, ohne dass Teilbereiche dessen frei von gelegten Knollen bleiben und/oder Knollen in Teilbereichen gelegt werden, in denen bereits zuvor welche gelegt wurden.

Besonders bevorzugt ist die Steuereinheit zur automatischen orts-, fahrgeschwindigkeits-, fahrtrichtungs- oder schlupfabhängigen Steuerung der Koppelvorrichtung ausgebildet. Auf Basis des Ortungssensors oder anhand weiterer Sensoren oder von der Zugmaschine auf die Steuereinheit übertragener Signale registriert die Steuereinheit vorzugsweise Daten bezüglich des Aufenthaltsortes, der aktuellen Fahrgeschwindigkeit oder der Fahrtrichtung und wertet diese insbesondere dynamisch aus. Bei Kurvenfahrt kann somit etwa die mittlere, d.h. die über einen Zeitraum vom zumindest 3 Sekunden gemittelte, Umlaufzahl des Förderelementes über die Breite und somit die entlang der Querrichtung nebeneinander angeordneten Legevorrichtungen variieren, um konstante Abstände zwischen den pro Legevorrichtung gelegten Knollen zu realisieren.

Ein Schlupf, welcher abweichende Drehzahlen von Antriebswellenvorrichtung und dem Triebrad bzw. dem Förderelement der zumindest einen Legevorrichtung meint, lässt sich beispielsweise anhand eines Schlupfsensors innerhalb der Koppelvorrichtung messen. Alternativ kann der Schlupf durch die Steuereinheit derart ermittelt werden, dass zum einen die Drehzahl der Antriebswellenvorrichtung gemessen wird und zum anderen die Drehzahl des Förderelementes anhand einer Belegungserkennungsvorrichtung gemessen wird, welche während des Umlaufs des Förderelementes dieses, insbesondere pro Becherelement, auf davon beförderte Knollen überprüft und dabei vorzugsweise getaktet nach der Umlaufgeschwindigkeit des Förderelementes betrieben wird. Durch die Abhängigkeit der Steuerung der Koppelvorrichtung, insbesondere aller Koppelvorrichtungen, in Abhängig von den genannten Größen, ist eine automatisierte und umfangreiche Steuerung zur Berücksichtigung unterschiedlicher Randbedingungen beim Legen der Kartoffeln gegeben.

Weitere Einzelheiten und Vorteile der Erfindung sind den nachfolgend beschriebenen, schematisch dargestellten Ausführungsbeispielen zu entnehmen; es zeigen:
- Fig. 1: eine Übersichtsdarstellung einer erfindungsgemäßen Ausgestaltungsform der Legemaschine,
- Fig. 2: eine Übersichtsdarstellung einer Legevorrichtung der Ausgestaltungsform gemäß Fig. 1,
- Fig. 3: eine Übersichtsdarstellung der Elektromagnetkupplung mit einer Antriebs- und einer Hohlwelle der Ausgestaltungsform gemäß Fig. 1,
- Fig. 4: einen Querschnitt einer Legevorrichtung der Ausgestaltungsform gemäß Fig. 1.

Die nachfolgend erläuterten Merkmale des erfindungsgemäßen Ausführungsbeispiels können auch einzeln oder in anderen Kombinationen als dargestellt oder beschrieben Gegenstand der Erfindung sein, stets aber zumindest in Kombination mit den Merkmalen des Anspruchs 1. Sofern sinnvoll sind funktional gleichwirkende Teile mit identischen Bezugsziffern versehen.

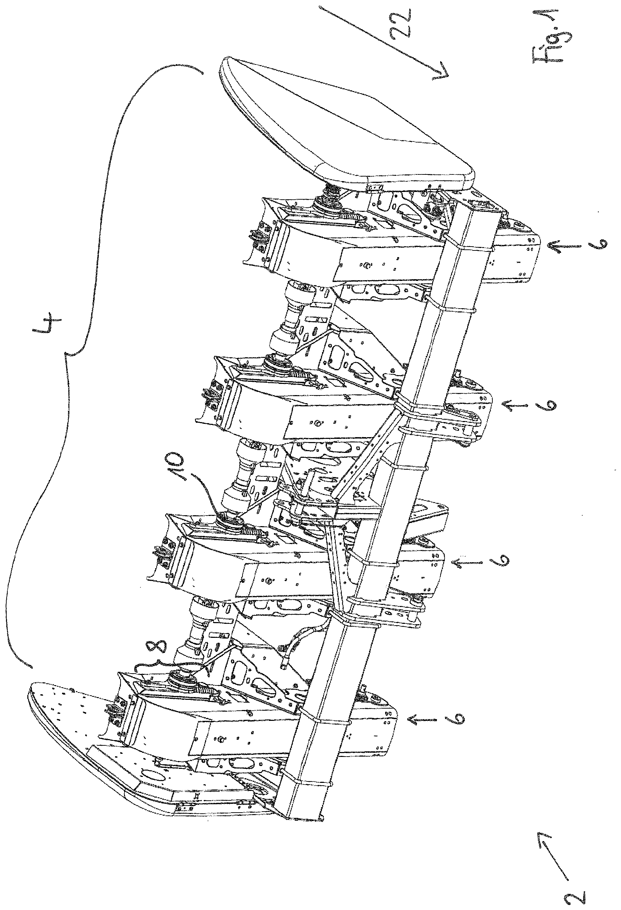

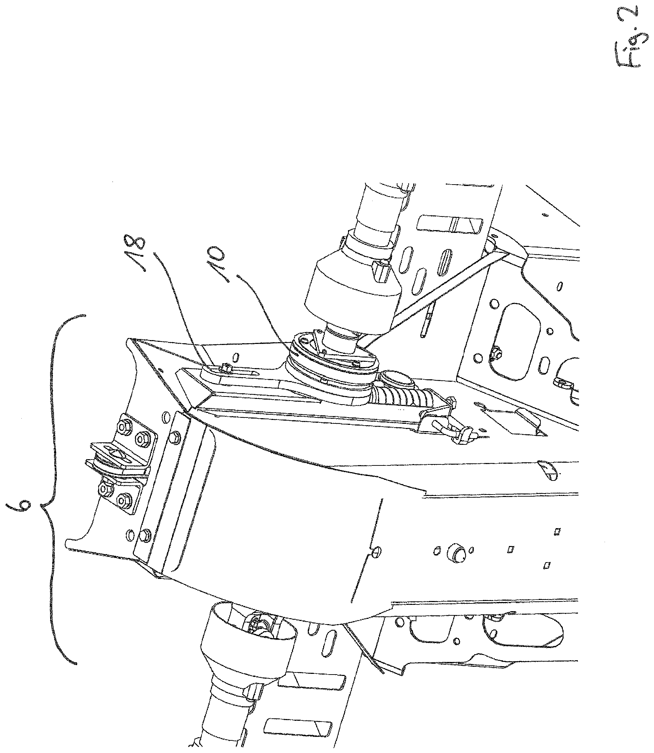

Fig. 1 zeigt eine Legemaschine 2 zum Legen von Knollen, welche einen Bunker 4 zur Bevorratung der Knollen aufweist, dessen in Fortbewegungsrichtung 22 hintere Begrenzung nicht dargestellt ist. Die Legemaschine 2 ist im Betrieb an eine Zugmaschine gekoppelt und hat vier Legevorrichtungen 6, die jeweils zumindest ein im Betrieb der Legevorrichtung 6 umlaufendes Förderelement aufweisen, welches in Fig. 2 von einem Gehäuseteil der Legevorrichtung 6 verdeckt ist. Die Legemaschine 2 umfasst außerdem eine Antriebsvorrichtung. Jede der Legevorrichtungen 6 weist eine Koppelvorrichtung 8 auf, die von einer Koppelstellung in eine Trennstellung überführbar ist. In der Koppelstellung ist im Betrieb zumindest ein Förderelement der jeweiligen Legevorrichtung 6 von der Antriebsvorrichtung angetrieben. In der Trennstellung ist im Betrieb das Förderelement nicht von der Antriebsvorrichtung angetrieben. Die Koppelvorrichtung 8 einer jeden Legevorrichtung 6 weist eine Elektromagnetkupplung 10 auf, deren Gehäuse dargestellt ist.

Die Elektromagnetkupplung 10 hat zwei Kupplungspartner, wovon einer entlang einer Kupplungsrotationsachse 24 verschiebbar ist. Beide Kupplungspartner haben umlaufende und rotationssymmetrische Reibflächen zur reibschlüssigen Kraftübertragung der Kupplungspartner in Koppelstellung. Die Reibflächen der beiden Kupplungspartner sind im Wesentlichen eben und eine zu den Reibflächen rechtwinklig angeordnete Reibflächennormale parallel zur oder in der Kupplungsrotationsachse angeordnet.

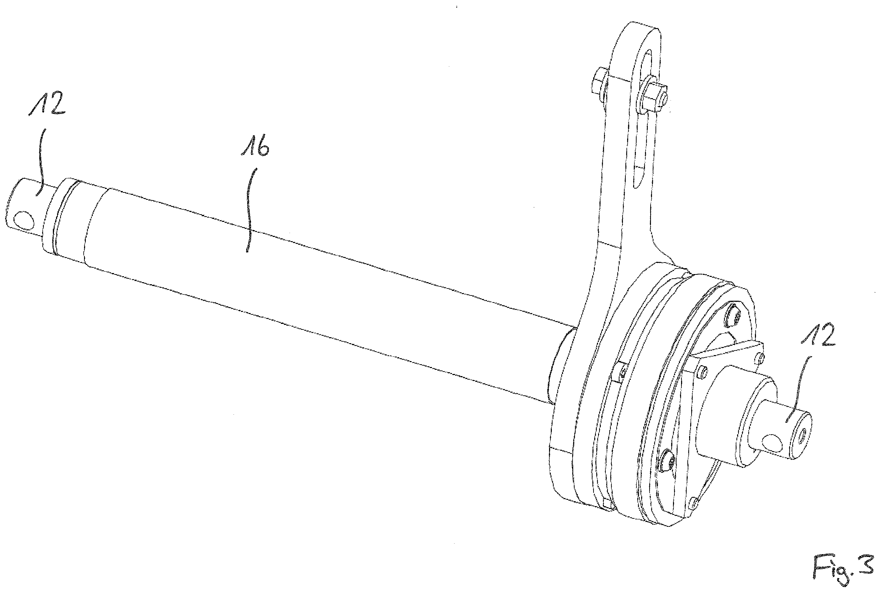

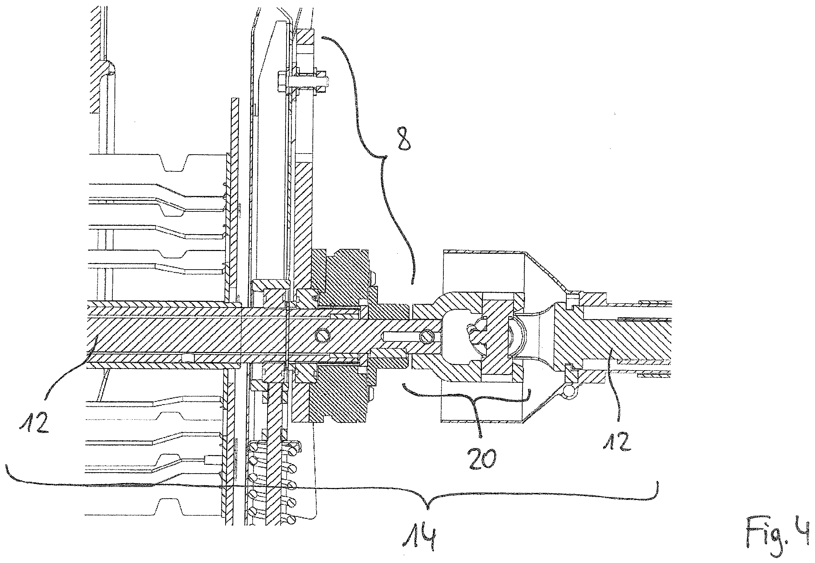

Die Antriebsvorrichtung hat einen Hydraulikmotor und eine Antriebswellenvorrichtung 14. Die Fig. 3 und 4 zeigen, dass die Antriebswellenvorrichtung 14 eine Mehrzahl an Antriebswellen 12 aufweist. Darüber hinaus umfasst die Legevorrichtung 6 eine drehbar auf einer Antriebswelle 12 gelagerte Hohlwelle 16. Die Antriebsvorrichtung, im Einzelnen die durch die Hohlwelle 16 verlaufende Antriebswelle 12 und die Hohlwelle 16, sind in Koppelstellung durch die Elektromagnetkupplung 10 mechanisch gekoppelt. Die Koppelvorrichtung 8 weist eine Drehmomentstütze 18 auf, die in der Trennstellung der Koppelvorrichtung 8 einen Umlauf des Förderelementes verhindert (vergl. Fig. 2 und 3). Fig. 4 zeigt ein Kardangelenk 20, durch welches benachbarte Antriebswellen 12 schwenkbar zueinander miteinander verbunden sind, wobei in Fig. 2 die Kardangelenke zumindest teilweise überdeckt sind.

Die Legemaschine 2 umfasst eine nicht dargestellte Steuereinheit, welche zur voneinander unabhängigen Ansteuerung der Elektromagnetkupplungen 10 ausgebildet ist. Dabei ist die Steuereinheit zur Ansteuerung der Koppelvorrichtungen 8 zur Ausgabe von analogen, elektrischen Ansteuersignalen ausgebildet. Weiterhin ist die Steuereinheit zur Pulsweitenmodulation der Ansteuersignale ausgebildet. Die Steuereinheit ist darüber hinaus zum Empfang von Informationen eines Ortungssensors und eines Schlupf-sensors ausgebildet. Auf Basis dessen ist die Steuereinheit zur automatischen, orts-, fahrgeschwindigkeits-, fahrtrichtungs- oder schlupfabhängigen Steuerung der Koppelvorrichtungen 8 ausgebildet.

## Patentansprüche

1. Legemaschine (2) zum Legen von Knollen, wobei die Legemaschine (2) zumindest einen Bunker (4) zur Bevorratung der Knollen, zumindest zwei Legevorrichtungen (6), die jeweils zumindest ein im Betrieb der Legevorrichtung (6) umlaufendes und vereinzelte Knollen dem Erdboden zuführendes Förderelement aufweisen, und zumindest eine Antriebsvorrichtung umfasst, wobei zumindest eine der Legevorrichtungen (6), insbesondere jede Legevorrichtung (6), eine Koppelvorrichtung (8) aufweist, die von einer Koppelstellung, in der im Betrieb zumindest ein Förderelement der Legevorrichtung (6) von der Antriebsvorrichtung angetrieben ist, in eine Trennstellung überführbar ist, in der im Betrieb das Förderelement nicht von der Antriebsvorrichtung angetrieben ist,
**dadurch gekennzeichnet, dass**
die Koppelvorrichtung eine Elektromagnetkupplung (10) aufweist oder als Elektromagnetkupplung (10) ausgebildet ist, wobei die Elektromagnetkupplung zumindest zwei Kupplungspartner aufweist, die zur reibschlüssigen Kraftübertragung in Koppelstellung ausgebildet sind und von denen zumindest ein Kupplungspartner entlang einer Kupplungsrotationsachse verschiebbar ist, wobei zumindest eine erste Reibfläche im Wesentlichen eben ist und eine zur ersten Reibfläche rechtwinklig angeordnete Reibflächennormale parallel zur oder in der Kupplungsrotationsachse angeordnet ist.

2. Legemaschine nach Anspruch 1, **dadurch gekennzeichnet, dass** die Antriebsvorrichtung einen Hydraulikmotor und/oder zumindest ein im Betrieb auf dem Boden abrollendes Antriebsrad umfasst, wobei die Antriebsvorrichtung zusätzlich vorzugsweise eine, insbesondere zumindest eine drehbar gelagerte Antriebswelle (12) aufweisende, Antriebswellenvorrichtung (14) umfasst.

3. Legemaschine nach Anspruch 2, **dadurch gekennzeichnet, dass** die Legevorrichtung (6) zumindest eine drehbar auf der Antriebswelle (12) gelagerte Hohlwelle (16) umfasst.

4. Legemaschine nach Anspruch 3, **dadurch gekennzeichnet, dass** die Antriebsvorrichtung und die Hohlwelle (16) in Koppelstellung durch die Elektromagnetkupplung (10) mechanisch gekoppelt sind, insbesondere derart, dass Ihre Drehzahlen im Betrieb in Koppelstellung übereinstimmen.

5. Legemaschine nach einem der vorhergehenden Ansprüche, **dadurch gekennzeichnet, dass** die Koppelvorrichtung (8) zur Überführung derart ausgebildet ist, dass dabei zumindest ein Teil Koppelvorrichtung (8) zumindest anteilig, insbesondere ausschließlich, axial oder radial bewegt wird.

6. Legemaschine nach einem der vorhergehenden Ansprüche, **dadurch gekennzeichnet, dass** zumindest ein Kupplungspartner zumindest eine um die Kupplungsrotationsachse umlaufend angeordnete, insbesondere rotationssymmetrische Reibfläche oder Umhüllende der Reibfläche hat.

7. Legemaschine nach einem der vorhergehenden Ansprüche, **dadurch gekennzeichnet, dass** die Legemaschine (2) eine Steuereinheit umfasst, welche zur voneinander unabhängigen Ansteuerung unterschiedlicher Elektromagnetkupplungen (10) ausgebildet ist.

8. Legemaschine nach Anspruch 7, **dadurch gekennzeichnet, dass** die Steuereinheit zur Ansteuerung der Kupplungsvorrichtung (8) zur Ausgabe von, insbesondere analogen, elektrischen Ansteuersignalen ausgebildet ist.

9. Legemaschine nach Anspruch 7 oder 8, **dadurch gekennzeichnet, dass** die Steuereinheit zur Pulsweitenmodulation der Ansteuersignale ausgebildet ist.

10. Legemaschine nach einem der Ansprüche 7 bis 9, **dadurch gekennzeichnet, dass** die Steuereinheit zum Empfang von Informationen eines Ortungssensors und/oder zumindest eines Schlupfsensors ausgebildet ist oder einen Ortungssensor aufweist.

11. Legemaschine nach einem der Ansprüche 7 bis 10, **dadurch gekennzeichnet, dass** die Steuereinheit zur automatischen, insbesondere orts-, fahrgeschwindigkeits-, fahrtrichtungs- oder schlupfabhängigen, Steuerung der Koppelvorrichtung (8) ausgebildet ist.

## Claims

1. Planting machine (2) for planting tubers, wherein the planting machine (2) comprises at least one hopper (4) for holding the tubers, at least two planting devices (6), which each have at least one conveying element that circulates during operation of the planting device (6) and feeds individually separated tubers to the ground, and at least one drive device, wherein at least one of the planting devices (6), in particular each planting device (6), has a coupling device (8), which can be transferred from a coupled position, in which at least one conveying element of the planting device (6) is driven by the drive device during operation, to a disconnected position, in which the conveying element is not driven by the drive device during operation, **characterized in that** the coupling device has an electromagnetic clutch (10) or is designed as an electromagnetic clutch (10), wherein the electromagnetic clutch has at least two coupling elements, which are designed to transmit force by way of frictional engagement in the coupled position and of which at least one coupling element is displaceable along a coupling rotation axis, wherein at least a first friction surface is substantially flat and a friction surface normal, arranged at a right angle to the first friction surface, is arranged parallel to or in the coupling rotation axis.

2. Planting machine according to Claim 1, **characterized in that** the drive device comprises a hydraulic motor and/or at least one drive wheel, which rolls on the ground during operation, wherein the drive device additionally comprises preferably one drive shaft device (14), in particular having at least one rotatably mounted drive shaft (12) .

3. Planting machine according to Claim 2, **characterized in that** the planting device (6) comprises at least one hollow shaft (16), which is rotatably mounted on the drive shaft (12).

4. Planting machine according to Claim 3, **characterized in that** the drive device and the hollow shaft (16) in the coupled position are mechanically coupled by the electromagnetic clutch (10), in particular such that the rotational speeds thereof match during operation in the coupled position.

5. Planting machine according to any one of the preceding claims, **characterized in that**, for the transfer, the coupling device (8) is designed such that at least part of the coupling device (8) is at least partly, in particular exclusively, moved axially or radially.

6. Planting machine according to any one of the preceding claims, **characterized in that** at least one coupling element has at least one friction surface, or envelope of the friction surface, which is in particular rotationally symmetrical and which is arranged so as to run around the coupling rotation axis.

7. Planting machine according to any one of the preceding claims, **characterized in that** the planting machine (2) comprises a control unit, which is designed to actuate different electromagnetic clutches (10) independently of one another.

8. Planting machine according to Claim 7, **characterized in that**, for actuating the coupling device (8), the control unit is designed to output electrical actuation signals, in particular of the analogue type.

9. Planting machine according to Claim 7 or 8, **characterized in that** the control unit is designed to modulate the pulse width of the actuation signals.

10. Planting machine according to any one of Claims 7 to 9, **characterized in that** the control unit is designed to receive information from a location sensor and/or at least one slip sensor or has a location sensor.

11. Planting machine according to any one of Claims 7 to 10, **characterized in that** the control unit is designed to control the coupling device (8) automatically, in particular dependent on location, travelling speed, travelling direction or slip.

## Revendications

1. Machine à planter (2) destinée à planter des tubercules, la machine à planter (2) comprenant au moins une trémie (4) destinée à stocker les tubercules, au moins deux dispositifs de plantation (6) qui comportent chacun au moins un élément de transport qui circule en carrousel pendant le fonctionnement du dispositif de plantation (6) et qui amène des tubercules individuels au sol et au moins un dispositif d'entraînement, au moins un des dispositifs de plantation (6), en particulier chaque dispositif de plantation (6), comporte un dispositif d'accouplement (8) qui peut être transféré d'une position d'accouplement, dans laquelle au moins un élément de transport du dispositif de plantation (6) est entraîné pendant le fonctionnement par le dispositif d'entraînement, dans une position de séparation dans laquelle l'élément de transport n'est pas entraîné pendant le fonctionnement par le dispositif d'entraînement,
**caractérisé en ce que**
le dispositif d'accouplement comporte un accouplement électromagnétique (10) ou est conçu comme un accouplement électromagnétique (10), l'accouplement électromagnétique comportant au moins deux partenaires d'accouplement qui sont conçus pour transmettre une force par friction dans la position d'accouplement et dont au moins un partenaire d'accouplement est déplaçable le long d'un axe de rotation d'accouplement, au moins une première surface de friction étant sensiblement plane et une normale à la surface de friction, disposée à angle droit par rapport à la première surface de friction, étant disposée suivant l'axe de rotation d'accouplement ou parallèlement à celui-ci.

2. Machine à planter selon la revendication 1, **caractérisée en ce que** le dispositif d'entraînement comprend un moteur hydraulique et/ou au moins une roue d'entraînement qui roule sur le sol pendant le fonctionnement, le dispositif d'entraînement comprenant en outre de préférence un dispositif à arbres d'entraînement (14), comportant en particulier au moins un arbre d'entraînement (12) monté de manière rotative.

3. Machine à planter selon la revendication 2, **caractérisée en ce que** le dispositif de plantation (6) comprend au moins un arbre creux (16) monté de manière rotative sur l'arbre d'entraînement (12).

4. Machine à planter selon la revendication 3, **caractérisée en ce que** le dispositif d'entraînement et l'arbre creux (16) sont accouplés mécaniquement en position d'accouplement par le biais de l'accouplement électromagnétique (10), notamment de manière à ce que leurs vitesses de rotation s'accordent lors du fonctionnement dans la position d'accouplement.

5. Machine à planter selon l'une des revendications précédentes, **caractérisée en ce que** le dispositif d'accouplement (8) est conçu pour le transfert de manière à ce qu'au moins une partie du dispositif d'accouplement (8) soit déplacée au moins partiellement, en particulier exclusivement, axialement ou radialement.

6. Machine à planter selon l'une des revendications précédentes, **caractérisée en ce qu'**au moins un partenaire d'accouplement comporte au moins une surface de friction ou enveloppe de surface de friction, notamment à symétrie de révolution, qui est disposée de manière à circuler en carrousel autour de l'axe de rotation d'accouplement.

7. Machine à planter selon l'une des revendications précédentes, **caractérisée en ce que** la Machine à planter (2) comprend une unité de commande qui est conçue pour commander différents accouplements électromagnétiques (10) indépendamment les uns des autres.

8. Machine à planter selon la revendication 7, **caractérisée en ce que** l'unité de commande destinée à commander le dispositif d'accouplement (8) est conçue pour émettre des signaux de commande électriques, notamment analogiques.

9. Machine à planter selon la revendication 7 ou 8, **caractérisée en ce que** l'unité de commande est conçue pour moduler les signaux de commande en largeur d'impulsion.

10. Machine à planter selon l'une des revendications 7 à 9, **caractérisée en ce que** l'unité de commande est conçue pour recevoir des informations d'un capteur de localisation et/ou d'au moins un capteur de glissement ou comporte un capteur de localisation.

11. Machine à planter selon l'une des revendications 7 à 10, **caractérisée en ce que** l'unité de commande est conçue pour commander le dispositif d'accouplement (8) de manière automatique, notamment en fonction de l'emplacement, de la vitesse d'avancement, du sens d'avancement ou du glissement.
